# EUROPEAN PATENT SPECIFICATION

(11) **EP 3 851 337 B1**
(45) Date of publication and mention of the grant of the patent: **29.10.2025**
(21) Application number: 19859386.5
(22) Date of filing: 16.09.2019
(51) Int. Cl.: B60R 21/215, E05D 1/00, E05D 9/00

(54) **AIRBAG DOOR HINGE, TRIM FOR AUTOMOBILE INTERIOR COMPRISING SAME**
AIRBAG-TÜRSCHARNIER, VERKLEIDUNG FÜR FAHRZEUGINNENRAUM DAMIT
CHARNIÈRE DE PORTE À COUSSIN DE SÉCURITÉ GONFLABLE, GARNITURE POUR INTÉRIEUR DE VÉHICULE AUTOMOBILE COMPRENANT CELLE-CI

(30) Priority: 14.09.2018 CN 201821507407 U
(43) Date of publication of application: 21.07.2021
(73) Proprietor: Shanghai Yanfeng Jinqiao Automotive Trim Systems Co., Ltd., Shanghai 201206 (CN)
(72) Inventor: HOU, Jianfeng, Shanghai 200233 (CN); CUI, Feng, Shanghai 200233 (CN); DAI, Xinye, Shanghai 200233 (CN); HUAN, Dong, Shanghai 200233 (CN)
(74) Representative: Meissner Bolte Partnerschaft mbB
(86) International application number: PCT/CN2019/105927
(87) International publication number: WO 2020/052684

(56) References cited:
- EP-A1- 1 464 784
- CN-A- 1 168 703
- CN-A- 102 555 972
- CN-U- 208 774 709
- DE-A1- 102008 042 657
- DE-A1- 102012 220 979
- DE-A1- 102012 220 979
- DE-A1- 102013 017 382
- DE-A1- 102015 104 715
- US-A1- 2009 217 484

## Description

### TECHNICAL FIELD

The present disclosure relates to the field of automobile accessories, in particular to a hinge structure with inherent stretch for an automobile airbag door, and a trim component for vehicle interior including the hinge.

### BACKGROUND

A vehicle interior trim component comprises an airbag door hinge, which is configured to couple an airbag door and a load bearing component surrounding the airbag door and the airbag door hinge guides the airbag door when the airbag door is opened. Activation of the airbag causes the airbag door to open and the airbag to deploy thereby ejecting the airbag door. The airbag door should be designed in such a way that the airbag door can open easily when the airbag is triggered; moreover, in order to avoid possible harm to passengers in the airbag area, the airbag door hinge should be designed in such a way that it does not allow the airbag door to detach from the load bearing component in any case.

The airbag door hinge may be in the form of a fabric. The Chinese Patent Application No. CN 105358385A discloses an airbag door hinge having a woven base structure in which stop threads are integrated, and the stop threads have the same or lower tensile strength than the threads of the base structure, and a longer length than the threads of the woven base structure. An example of an airbag door hinge corresponding to the preamble of claim 1 is disclosed in DE 10 2015 104 715 A1.

The force acting on the airbag door hinge is related to the size of the airbag door. The larger or heavier the airbag door, the greater the force acting on the hinge. In the prior art, fabric-based airbag door hinges have low elongation or insufficient tensile strength and tend to break because the hinge is unable to withstand excessive shear stress during airbag door deployment, and the airbag door flies out and poses a safety hazard.

### SUMMARY

The present disclosure relates to an airbag door hinge for connection to an airbag door and a load-bearing component surrounding the airbag door, the airbag door hinge having a double-layer structure comprising a first textile layer 1 and a second textile layer 2, the first textile layer 1 and the second textile layer 2 being connected by a plurality of connecting elements 3.

In one embodiment, in the airbag door hinge of the present disclosure, the first textile layer 1 and the second textile layer 2 are each continuous textile layer.

In one embodiment, in the airbag door hinge of the present disclosure, the second textile layer 2 is formed by folding the first textile layer at an edge.

In another embodiment, in the airbag door hinge of the present disclosure, one of the first textile layer 1 and the second textile layer 2 is a continuous textile layer, and the other is a textile layer comprising at least one spaced area.

In yet another embodiment, in the airbag door hinge of the present disclosure, the first textile layer 1 and the second textile layer 2 are both textile layers comprising at least one spaced area.

In one preferred embodiment, in the airbag door hinge of the present disclosure, the spaced area is defined by the connecting portion 3.

In one embodiment, in the airbag door hinge of the present disclosure, a weft spacing L between two adjacent connecting portions 3 in a weft direction is 5-200 mm.

In yet another embodiment, the weft spacing L between two adjacent connecting portions 3 in the weft direction in the airbag door hinge of the present disclosure is 10-100 mm.

In another embodiment, the weft spacing L between two adjacent connecting portions 3 in the weft direction in the airbag door hinge of the present disclosure is 20-50 mm.

In yet another embodiment, the weft spacing L between two adjacent connecting portions 3 in the weft direction in the airbag door hinge of the present disclosure is 5-70 mm.

In another embodiment, the weft spacing L between two adjacent connecting portions 3 in the weft direction in the airbag door hinge of the present disclosure is 70-200 mm.

In one embodiment, in the airbag door hinge of the present disclosure, a gap h between the first textile layer 1 and the second textile layer 2 is 2 mm or less.

According to the invention, in the airbag door hinge of the present disclosure, the connecting portion 3 is a thread, a loop or a combination thereof.

In yet another embodiment, in the airbag door hinge of the present disclosure, the transversal density of the first textile layer 1 and the second textile layer 2 is 5-25 loops/25 mm; and/or the longitudinal density is 5-25 loops/25 mm.

In yet another embodiment, in the airbag door hinge of the present disclosure, the grammage of the first textile layer 1 and the second textile layer 2 is 100 to 2000 gsm.

In one embodiment, in the airbag door hinge of the present disclosure, the first textile layer 1 and the second textile layer 2 are knitted fabrics.

In a preferred embodiment, in the airbag door hinge of the present disclosure, the first textile layer 1 and the second textile layer 2 are weft-knitted or warp-knitted fabrics.

In one embodiment, in the airbag door hinge of the present disclosure, the first textile layer 1 and/or the second textile layer 2 comprises loops, and the connection is realized by embedding the loops comprised in the first textile layer 1 into the second textile layer 2 and/or by embedding the loops comprised in the second textile layer 2 into the first textile layer 1.

In another embodiment, in the airbag door hinge of the present disclosure, the first textile layer 1 and the second textile layer 2 have the same elongation and have the same tensile strength.

In one embodiment, a ratio L1/D of the sum L1 of the weft spacings of the spaced area in the airbag door hinge to a total weft length of the hinge D is 0.8 or less, preferably 0.35 to 0.8.

In one embodiment, in the airbag door hinge of the present disclosure, a warp spacing L' between two adjacent connecting portions (3) in a warp direction is 150 mm or less, preferably 2 to 150 mm.

In one embodiment, in the airbag door hinge of the present disclosure, the first textile layer 1 and the second textile layer 2 comprise fiber material.

In a preferred embodiment, in the airbag door hinge of the present disclosure, the fiber material comprises synthetic fiber, natural fiber or a combination thereof, preferably comprises fibers from polyethylene, polypropylene, regenerated cellulose, polyamides, carbon fibers, polyacrylonitrile, polyesters, cellulose, cotton, sisal, abaca, kapok, ramie, flax, hemp, jute, animal hair, silk or a combination thereof.

In one embodiment, the loops are configured to stretch or elongate to provide extension of the airbag door hinge during deployment of an airbag.

In one embodiment, the airbag door hinge is coupled to the airbag door and the load bearing component by insert injection molding process.

In another aspect, the invention relates to a trim component for vehicle interior, including: an airbag door, a load bearing component surrounding the airbag door, and the airbag door hinge of the invention, wherein the airbag door hinge is configured to couple the airbag door and the load bearing component.

The load bearing component comprises: a substrate and a chute, wherein the substrate defines an opening through which the airbag can deploy; the substrate and the chute are integrally formed; the airbag door is configured to cover the opening; and the airbag door hinge is configured to couple the airbag door and the substrate.

The load bearing component comprises: a substrate and a chute, wherein the substrate defines an opening through which the airbag can deploy; the substrate is coupled to the chute; the airbag door is configured to cover the opening; and the airbag door hinge is configured to couple the airbag door and the chute.

In yet another aspect, the disclosure relates to a method for manufacturing the trim component, the airbag door comprises a basic door, the method comprises: (1) providing the airbag door hinge; (2) disposing the airbag door hinge in a mold to form the chute, the substrate and the basic door; (3) injecting molten plastic material into the mold, covering at least part of the airbag door hinge by the molten plastic material; (4) cooling the molten plastic material to get the chute, the substrate and the basic door integrally formed, with the airbag door hinge embedded in the substrate and embedded the basic door; and (5) providing a weakened area between the basic door and the substrate by a weakening process so that the airbag door can unfold to form the opening to enable the deployment of the airbag through the opening.

In still another aspect, the disclosure relates to a method for manufacturing the trim component, wherein the airbag door comprises a reinforcement door and a basic door, the method comprises: (1) providing the airbag door hinge; (2) disposing the airbag door hinge in a mold to form the chute and the reinforcement door; (3) injecting molten plastic material into the mold, covering at least part of the airbag door hinge by the molten plastic material; (4) cooling the molten plastic material to get the chute and the reinforcement door, with at least part of the airbag door hinge embedded in the chute and in the reinforcement door to connect the reinforcement door with the chute; (5) providing the substrate, forming a weakened area between the basic door and the substrate by a weakening process, so that the airbag door can unfold to form the opening to enable the deployment of the airbag through the opening; and (6) welding to connect the chute with the substrate, and to connect the reinforcement door with the basic door.

The airbag door hinge in the trim component for vehicle interior of the present disclosure can form a fabric product with high elongation properties and good tensile strength to prevent separation of the airbag door from the load bearing component. At the same time, the high elongation of the fabric helps to reduce the tensile strength on the fabric in the process of airbag door unfolding, and reduce or avoid the risk of the fabric breaking due to excessive shear tension. The trim component for vehicle interior is simple in manufacturing, good in safety performance, and suitable for industrial production.

### FIGURES

Fig. 1A is a schematic view showing a trim component for vehicle interior including an airbag door hinge according to an embodiment of the present disclosure.
Fig. 1B is a schematic view showing the trim component for vehicle interior including the airbag door hinge according to another embodiment of the present disclosure.
Figs. 2A-2G are schematic side views of a hinge structure of an embodiment of the present disclosure, Figs. 2H-2N are schematic top views corresponding to

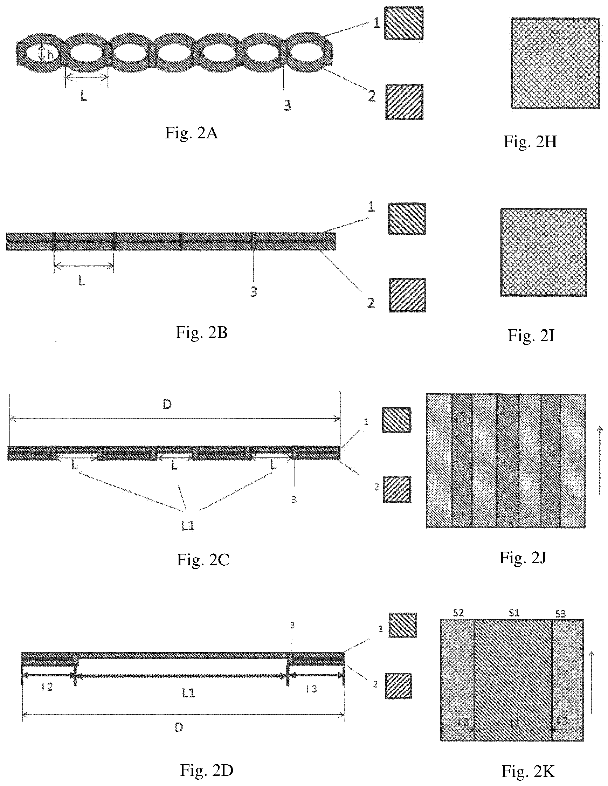

Figs. 2A-2G, wherein the direction indicated by an arrow in Figs. 2J-2N is a tensile direction, and the small square blocks on the right sides of the first textile layer 1 and the second textile layer 2 in Figs. 2A-2G represent schematic top views of the first textile layer 1 and the second textile layer 2, respectively.

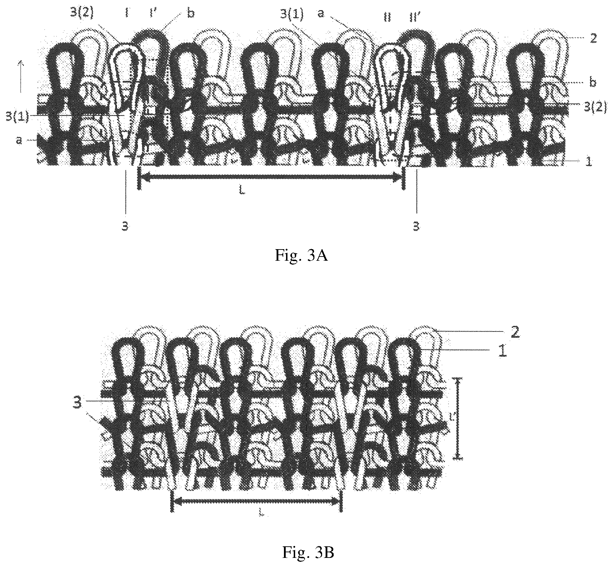

Figs. 3A-3B are top schematic loop views of a hinge of an embodiment of the present disclosure, wherein a direction indicated by an arrow is a tensile direction.

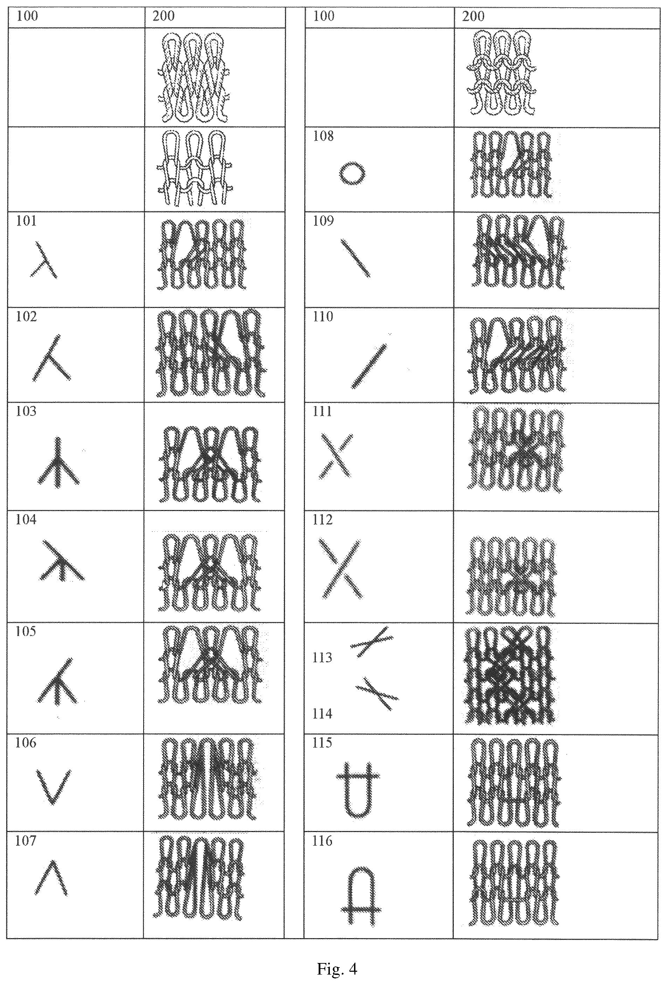

Fig. 4 is a schematic view and a loop view of stitch patterns that can be used in a first textile layer 1 and a second textile layer 2 in an embodiment of the present disclosure.

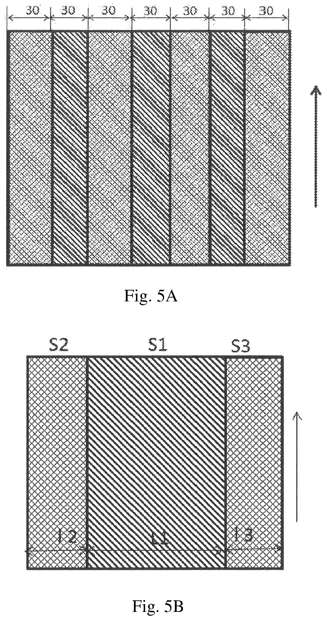

Figs. 5A-5B are schematic top views of an embodiment of the present disclosure.

### Description of Reference Numerals:

- a, b: loops
- A1: airbag door
- A11: reinforcement door of airbag door
- A12: basic door of airbag door
- A13: foam layer of airbag door
- A14: surface layer of airbag door
- A2: load bearing component
- A21: substrate
- A22: airbag chute
- A23: foam layer of load bearing component
- A24: surface layer of load bearing component
- C1: airbag door hinge (fabric)
- C10, C12, C13: fixed section of door hinge
- C11: hinged section of door hinge
- D: total weft length of the hinge
- G: airbag (schematic)
- h: gap (distance of first layer 1 and second layer 2)
- L: weft spacing (between 2 repeated joints in weft direction
- L': warp spacing (between 2 repeated of joints in warp direction)
- L1: sum of weft spacing
- O: opening
- S1: spaced area
- S2, S3: continuous area
- W: weakened area
- 1: first textile layer
- 2: second textile layer
- 3: connection area
- 3(1), 3(2): connecting loop
- I2: weft length corresponding to continuous area S2
- I3: weft length corresponding to continuous area S3
- 100: symbol
- 200: loop chart
- 101: loop transferred to the right
- 102: loop transferred to the left
- 103: three-loop overlap (I)
- 104: three-loop overlap (II)
- 105: three-loop overlap (III)
- 106: pulled front thread
- 107: pulled rear thread
- 108: hole
- 109: Entire row transferred to the left
- 110: Entire row transferred to the right
- 111: left twisted
- 112: right twisted
- 113: left twisted and pulled
- 114: right twisted and pulled
- 115: front floating thread
- 116: rear floating thread
- I, II, I', II': columns
- dotted arrow: airbag door opening direction
- solid arrow: tensile direction during airbag deployment

### DESCRIPTION

The present disclosure is described in further detail below, and the terminology is intended for the purpose of description and is not intended to be limiting of the present disclosure.

Unless defined otherwise, the technical and scientific terms used herein have the same meaning as commonly understood by those skilled in the art to which the present disclosure belongs. In the event of a conflict, the definition provided in the present application shall prevail. When an amount or other value or parameter is expressed in terms of a range, a preferred range, or a preferred upper numerical limit, as well as a preferred lower numerical limit, it should be understood that any range is specifically disclosed by combining any pair of upper range limits or preferred values with any lower range limit or preferred value, regardless of whether the range is specifically disclosed. Unless otherwise indicated, the numerical ranges set forth herein are intended to include the endpoints of the range and all integers and fractions (decimal) within the range.

It should be understood that the drawings are not necessarily drawn to scale.

All percentages, parts, ratios, etc. are expressed by weight unless otherwise indicated.

The term "about" or "approximately", when used in conjunction with a numerical variable, generally refers to the numerical value of the variable and all numerical values of the variable within experimental error (e.g., within a 95% confidence interval for an average) or within a specified numerical value ± 10%, or a broader range.

The expressions "comprising" or similar expressions "including", "containing" and "having", which are synonymous therewith, are open-ended and do not exclude additional unrecited elements, steps or components. The expression "consisting of" excludes any element, step or component not specified. The expression "consisting essentially of" means that the scope is limited to the indicated elements, steps or components, plus optional elements, steps or components that do not substantially affect the basic and novel characteristics of the claimed subject matter. It should be understood that the expression "comprising" encompasses the expressions "consisting essentially of" and "consisting of".

As used herein, the term "one or more" refers to one, two, three, four, five, six or more.

As used herein, the term "two or more" refers to two, three, four, five, six or more.

As used herein, the term "hinge" is a hinge in the form of a fabric, particularly in the form of a mesh.

As used herein, the term "transversal density" is the number of loops within a specified length (25 mm) along the transversal direction of the loop. The transversal density is calculated using methods well known in the art. This can be calculated, for example, by the ratio of the specified length (25 mm) to the loop spacing. In this context, the transversal direction is also to be understood as the weft direction.

As used herein, the term "longitudinal density" is the number of loops within a specified length (25 mm) along the longitudinal direction of the loop. Longitudinal density is calculated using methods well known in the art. This can be calculated, for example, by the ratio of specified length (25 mm) to loop height. Longitudinal direction is also understood herein as warp direction.

As used herein, the term "grammage" is the grams of dry weight per square meter, usually expressed in gsm or g/m2.

As used herein, the term "textile" is the way the basic structural units (loops, floating threads, tucks) that make up the fabric, as well as additional yarns or fiber aggregates, are configured, arranged, combined, and joined.

As used herein, the term "stretchability" refers to the elongation characteristic of a knitted fabric when subjected to a tensile strength, also referred to as extensibility. Measurements are typically made using ISO 13934. Stretchability is often used as an indicator of elongation. The first textile layer and the second textile layer of the present disclosure have the same or different elongation. The elongation of the hinge of the present application is about 20-200%, for example, about 50%, 80%, 100%, and 120%.

As used herein, the term "tensile strength" refers to the maximum force per specimen width reference in a unit of N/5cm that a fabric can withstand when stretched to break. Measurements are typically performed using methods well known in the art, for example ISO 13934. The first textile layer and the second textile layer of the present disclosure have the same or different tensile strength. The tensile strength of the hinge of the present disclosure is generally measured using a specimen having an effective width (weft width) of 5 cm, and the tensile direction is the warp direction of the hinge. The tensile strength is about 800 to 4000 N/5cm for example, about 800 N/5cm, 1200 N/5cm, 1500 N/5cm, 2000 N/5cm and 4000 N/5cm. Herein, deformation of the hinge under the tensile strength can be realized through the deformation of the loop included in the first and/or the second textile layer under the tensile strength.

Herein, "insert injection molding" refers to a molding process where a prepared dissimilar insert is disposed in a mold and then resin is injected therein, with the melted resin bonding and solidified with the insert, to obtain an integrally-formed product.

The present application is not limited to the order described herein with respect to the terms "first" and "second" to distinguish component names in the same relationship as used herein.

The present disclosure provides an airbag door hinge connected to an airbag door and a load bearing component surrounding the airbag door. The present disclosure also provides a trim component for vehicle interior, including: an airbag door, a load bearing component surrounding the airbag door, and an airbag door hinge connected to the airbag door and the load bearing component. The load bearing component may also be referred to as a carrier part.

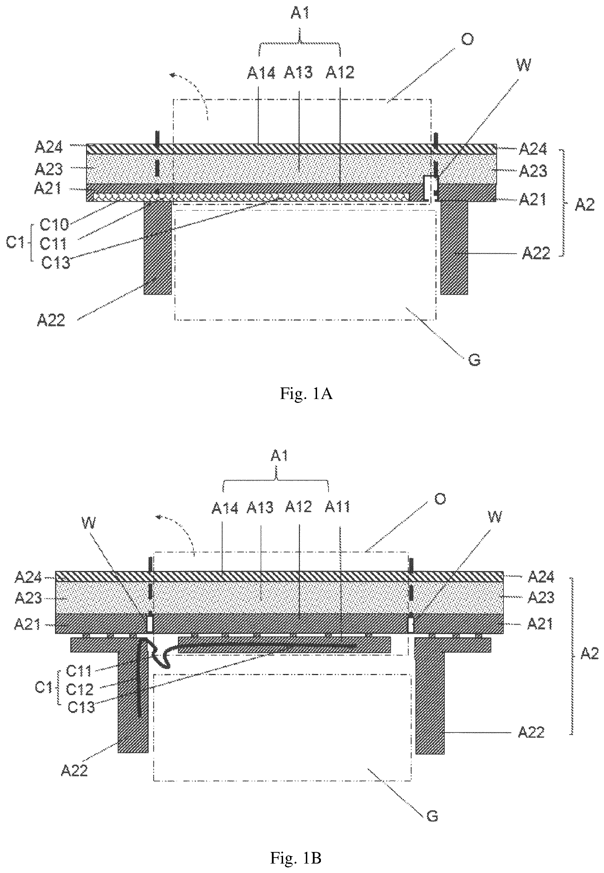

Referring to Fig. 1A, which is a schematic view of a trim component for vehicle interior including the airbag door hinge of the present disclosure and shows a position for an embodiment of the airbag door hinge. As shown in Fig. 1A, the trim component for vehicle interior according to one embodiment of the present disclosure comprises: an airbag door A1 (component shown in bold dotted lines), a load bearing component A2 surrounding the airbag door Al, and an airbag door hinge C1, i.e., a fabric. The hinge C1 is used to connect the airbag door A1 and the load bearing component A2. The connection may be accomplished, for example, by using an insert injection molding process.

Specifically, the load bearing component A2 comprises a substrate A21 and a chute A22. The substrate A21 defines an opening O for deployment of an airbag G through the opening. The chute A22 is integrally formed with the substrate A21. In one embodiment, the load bearing component A2 further comprises a foam layer A23 and/or a surface layer A24. The foam layer A23 and the surface layer A24 of the load bearing component are sequentially arranged on the substrate A21 facing away from the chute A22. The foam layer A23 of the load bearing component and the surface layer A24 of the load bearing component may be composed of the same or different materials.

The airbag door A1 is configured to cover the opening O. The airbag door A1 comprises a basic door A12 of the airbag door and, optionally, the foam layer A13 of the airbag door and the surface layer A14 of the airbag door, sequentially from bottom to top. Specifically, the airbag door hinge C1 is used to connect the basic door A12 of the airbag door and the substrate A21, wherein the airbag door hinge C1 comprises fixed sections C10 and C13, and a hinged section C11. The fixed sections C10 and C13 are fixed in the substrate A21 and the basic door A12 of the airbag door, respectively. In one embodiment, the hinge section C11 is also fixed in the substrate A21 and the basic door A12 of the airbag door. The foam layer A13 of the airbag door and the surface layer A14 of the airbag door may be composed of the same or different materials.

In one embodiment, the foam layer A23 of the load bearing component and the foam layer A13 of the airbag door are composed of the same materials. The surface layer A24 of the load bearing component and the surface layer A14 of the airbag door are composed of the same materials.

In another embodiment, the substrate A21 and the basic door A12 of the airbag door are composed of the same materials. In yet another embodiment, the substrate A21 is integrally formed with the basic door A12 of the airbag door.

In the substrate A21, a weakened area W is also included and provided in the opening covered by the airbag door at a side distal to the connection of the hinge C1 with the substrate A21 so that the airbag door can be easily opened, and the airbag can be deployed from the chute towards the airbag door. The direction indicated by the dotted arrow in Fig. 1A is the direction in which the airbag door is opened.

Referring to Fig. 1B, which is a schematic view of a trim component for vehicle interior including the airbag door hinge of the present disclosure and shows the position for another embodiment of the airbag door hinge. As shown in Fig. 1B, another embodiment of the trim component for vehicle interior of the present disclosure comprises: an airbag door A1 (component shown in bold dotted lines), a load bearing component A2 surrounding the airbag door Al, and an airbag door hinge C1, i.e., a fabric. The hinge C1 is used to connect the airbag door A1 and the load bearing component A2. The connection may be accomplished, for example, using an insert injection molding process.

Specifically, the load bearing component A2 comprises a substrate A21 and a chute A22. The substrate A21 defines an opening O for deployment of an airbag G through the opening. The substrate A21 is connected to the chute A22, and the connection comprises, but is not limited to, connections through welding, adhesive, riveting, screwing, snap-fitting, preferably welding. In one embodiment, the load bearing component A2 further comprises a foam layer A23 and/or a surface layer A24. The foam layer A23 and the surface layer A24 of the load bearing component are sequentially arranged on the substrate A21 facing away from the chute A22. The foam layer A23 and the surface layer A24 of the load bearing component may be composed of the same or different materials.

The airbag door A1 is configured to cover the opening. The airbag door A1 comprises a reinforcement door All, a basic door A12, and optionally, a foam layer A13 and a surface layer A14, sequentially from bottom to top, wherein the connection of the reinforcement door A11 with the airbag door substrate A12 comprises, but is not limited to, connections through welding, adhesive, riveting, screwing, snap-fitting, and preferably welding. The foam layer A13 and the surface layer A14 of the airbag door may be composed of the same or different materials.

In one embodiment, the foam layer A23 of the load bearing component and the foam layer A13 of the airbag door are composed of the same materials. The surface layer A24 of the load bearing component and the surface layer A14 of the load bearing component are composed of the same materials.

In another embodiment, the substrate A21 and the basic door A12 of the airbag door are composed of the same materials. In yet another embodiment, the substrate A21 is integrally formed with the basic door A12 of the airbag door.

The airbag door hinge C1 is used to connect the reinforcement door A11 of the airbag door and the chute A22, wherein the airbag door hinge C1 comprises fixed sections C12 and C13 and a hinge section C11. The fixed sections C12 and C13 are fixed in the chute A22 and the reinforcement door A11 of the airbag door A1, respectively. The hinge section C11 is in a loosen state.

In the substrate A21, a weakened area W is also included and provided in the opening covered by the airbag door at both sides so that the airbag door can be opened easily, and the airbag can be deployed from the chute towards the airbag door. The direction indicated by the arrow in Fig. 1B is the direction in which the airbag door is opened.

In one embodiment, a method for manufacturing the trim component of the present disclosure includes:
(1) providing the airbag door hinge C1;
(2) disposing the airbag door hinge C1 in a mold for forming the chute A22, the substrate A21 and the basic door A12;
(3) injecting molten plastic material into the mold, covering at least part of the airbag door hinge C1 by the molten plastic material;
(4) cooling the molten plastic material to get the chute A22, the substrate A21 and the basic door A12 integrally formed, with the airbag door hinge C1 embedded in the substrate A21 and the basic door A12; and
(5) forming a weakened area W by weakening between the basic door A12 and the substrate A21, so that the airbag door A1 is flipped open to form the opening O to facilitate the deployment of the airbag G through the opening.

Specifically, the mold for the chute A22, the substrate A21 and the basic door A12 in step (2) is a mold for integral molding.

In step (2), the airbag door hinge C1 is disposed in the mold at portions where the substrate A21 and the basic door A12 are formed.

The molten plastic material described in step (3) is a molten plastic material commonly used in the art, such as polyvinyl chloride, polypropylene, polyacrylonitrile-butadiene-styrene, polyester, and polyurethane. The amount of the molten plastic material should allow that at least one side of the airbag door hinge C1 is embedded into the substrate A21 and the basic door A12, or the airbag door hinge C1 is embedded into the substrate A21 and the basic door A12 at a certain depth, so that it can be fixed by the substrate A21 and the basic door A12.

In step (4), the chute A22, the substrate A21, and the basic door A12 are integrally formed. The airbag door hinge C1 is embedded in the substrate A21 and the basic door A12.

After step (4), and before step (5), optionally, the foam layer and the surface layer may be compounded on an integrally-formed piece of the substrate A21 and the basic door A12 facing away from the chute A22, to form the foam layer A23 of the load bearing component, a surface layer A24 of the load bearing component, the foam layer A13 of the airbag door, and the surface layer A14 of the airbag door.

The configuration of the weakened area W in step (5) enables that the junction of the basic door A12 and the substrate A21 has weaker mechanical strength than the other portions of the basic door A12 and the substrate A21, so that the airbag door A1 can be opened and flipped under desired conditions. Generally, the weakening process may be a process commonly used in the art, such as laser weakening, hot knife weakening, and cold knife weakening. The depth of the weakened area may optionally extend from the substrate A21 to the foam layer A23 but should not extend to the surface layer A24.

In another embodiment, a method for manufacturing the trim component of the present disclosure includes:
(1) providing the airbag door hinge C1;
(2) disposing the airbag door hinge C1 in a mold for forming the chute A22 and the reinforcement door A11;
(3) injecting molten plastic material into the mold, covering at least part of the airbag door hinge C1 by the molten plastic material;
(4) cooling the molten plastic material to get the chute A22 and the reinforcement door A11, with at least part of the airbag door hinge C1 embedded in the chute A22 and the reinforcement door A11 to realize the connection of the reinforcement door A11 with the chute A22;
(5) providing the substrate A21, forming a weakened area W by weakening between the basic door A12 and the substrate A21, so that the airbag door A1 is flipped open to form the opening O to facilitate the deployment of the airbag G through the opening; and
(6) welding to connect the chute A22 with the substrate A21, and to connect the reinforcement door A11 with the basic door A12.

Specifically, in step (2), the two opposite fixed sections C12 and C13 of the airbag door hinge C1 are placed in the mold at portion where the chute A22 and the reinforcement door A11 are formed.

The molten plastic material in step (3) is as described above. The amount of the molten plastic material should allow that the airbag door hinge C1 has at least one side thereof embedded into the chute A22 and the reinforcement door A11, or the airbag door hinge C1 is embedded into the chute A22 and the reinforcement door A11 at a certain depth, so as to be fixed by the chute A22 and the reinforcement door A11.

In step (4), two opposite fixed sections C12 and C13 of the hinge C1 are embedded in the chute A22 and the reinforcement door A11, respectively, so that the reinforcement door A11 is connected with the chute A22 through the hinge section C11 of the hinge C1.

An integrally-formed piece of the substrate A21 and the basic door A12 is provided. After step (4), and before step (5), optionally, the foam layer and the surface layer may be compounded on the integrally-formed piece of the substrate A21 and the basic door A12 facing away from the chute A22, to form the foam layer A23 of the bearing layer, the surface layer A24 of the load bearing component, the foam layer A13 of the airbag door, and the surface layer A14 of the airbag door.

The configuration of the weakened area W in step (5) enables that the junction of the basic door A12 and the substrate A21 has weaker mechanical strength than the other portions of the basic door A12 and the substrate A21, so that the airbag door A1 can be opened and flipped under desired conditions. Generally, the weakening process may be a process commonly used in the art, such as laser weakening, hot knife weakening, and cold knife weakening. The depth of the weakened area may optionally extend from the substrate A21 to the foam layer A23 but should not extend to the surface layer A24.

Referring to Fig. 2A, it is a schematic side view of a hinge of an embodiment of the present disclosure. The airbag door hinge of the present disclosure is a double-layer structure and has a first textile layer 1 and a second textile layer 2. The first textile layer 1 is arranged parallel to the second textile layer 2. The first textile layer 1 and the second textile layer 2 are connected by a plurality of connecting portions 3.

Referring to Fig. 2A, the gap h between the first textile layer 1 and the second textile layer 2 is about 2 mm or less. The gap h between the first textile layer 1 and the second textile layer 2 is the distance between the lower side of the first textile layer 1 and the upper side of the second textile layer 2. In particular, the gap between the lower side of the first textile layer 1 and the upper side of the second textile layer 2 at the connection of the connecting portions 3 is about 0 mm, i.e. where the lower side of the first textile layer 1 is completely fitted to the upper side of the second textile layer 2 without a gap. The remaining part of the first textile layer 1 and the remaining part of the second textile layer 2 at a position without the connecting portions 3 are each separated, i.e. there is air or a so-called air layer between them. The distance between the lower side of the first textile layer 1 and the upper side of the second textile layer 2 at a position without the connecting portions 3 is about 2 mm or less. It should be noted that, since the textile layer is flexible, the gap at a position without the connecting portion 3 is not a constant value and varies with the distance from the connecting portion 3 but is in the range of 2 mm or less. The identification of the gap h between the first textile layer 1 and the second textile layer 2 in Fig. 2A is only exemplary. Preferably, the distance between the lower side of the first textile layer 1 and the upper side of the second textile layer 2 at a position without the connecting portion 3 may also be about 0 mm. That is, the lower side of the first textile layer 1 is completely joint to the second textile layer 2 with no gap in between, as shown in Fig. 2B.

Referring to Fig. 2A, the thickness of the first textile layer 1 and the second textile layer 2 is about 0.8 mm, respectively. The thickness of the hinge in Fig. 2A is about 1.6 mm at the connecting portion 3; it is below about 3.6 mm at a position without the connecting portion 3. Referring to Fig. 2B, the thickness of the first textile layer 1 and the second textile layer 2 is about 0.8 mm, respectively. In Fig. 2B the first textile layer 1 and the second textile layer 2 are completely joint and the thickness of the hinge is about 1.6 mm. A slightly thicker thickness of the textile layer is advantageous for obtaining a better elongation, but the feasibility of the injection molding process should be considered. The thickness of the first textile layer 1 and the second textile layer 2 is usually about 0.5-1 mm, respectively, taking into account the thickness, the injection molding process and the elongation of the material itself. The thickness of the hinge is typically about 1-4 mm.

The distance between two adjacent connecting portions 3 in the weft direction is the weft spacing L. A proper weft spacing L between the connecting portions 3 provides good tensile strength and elongation of the fabric. An excessively large weft spacing L is not conducive to the improvement of the overall strength of the fabric. An excessively small weft spacing L may affect the overall elongation of the fabric. The weft spacing L between two adjacent connecting portions 3 in the weft direction for the connection of the first textile layer 1 and the second textile layer 2 is about 5-200 mm, for example about 10-100 mm, about 20-50 mm, about 20-35 mm, about 5-70 mm, and about 70-200 mm.

Referring to Figs. 2A and 2B and their corresponding schematic top views 2H and 21, each of the first textile layer 1 and the second textile layer 2 are each continuous textile layers. The connecting portions 3 may be substantially uniformly distributed between the first textile layer and the second textile layer, i.e. the weft spacing L between two adjacent connecting portions 3 in the weft direction may be substantially the same. The weft spacing L between two adjacent connecting portions 3 in the weft direction for the connection of the first textile layer 1 and the second textile layer 2 is about 5-200 mm, preferably about 10-100 mm, more preferably about 20-50 mm, and even more preferably about 20-35 mm, for example about 5 mm or 30 mm. The weft spacing L between adjacent connecting portions 3 in the weft direction may also be different, i.e. the weft spacing L between adjacent connecting portions 3 in the weft direction is different, but the range of variation of the weft spacing L should be within the range of the weft spacing described above.

In one embodiment, one of the first textile layer 1 and the second textile layer 2 in the airbag door hinge is a continuous textile layer and the other layer is a textile layer comprising at least one spaced area. The spaced area is where the corresponding textile layer is missing. The spaced area is defined by the connecting portion 3. The length of each spaced area in the weft direction is the distance between two adjacent connecting portions in the weft direction, i.e. the weft spacing L. That is, the first textile layer 1 or the second textile layer 2 may also be intermittent between two adjacent connecting portions 3 in the weft direction, only the first textile layer 1 or the second textile layer 2 being present in the same area in weft direction in the spaced areas. The spaced area is defined by the connecting portion 3. The length of each spaced area in the weft direction is the distance between two adjacent connecting portions in the weft direction, i.e. the weft spacing L. To ensure proper elongation and tensile strength of the hinge, the ratio L1/D of the sum L1 of the respective weft spacing L of the spaced areas to the total weft length of the hinge D is about 0.8 or less. The total weft length D of the hinge is not particularly limited, generally about 160-250 mm.

Referring to Fig. 2C and its corresponding schematic top view 2J, the hinge comprises a plurality of spaced areas therein. The total number of the spaced areas is not particularly limited, and it is generally required that the ratio L1/D of the sum L1 of the weft spacing of the spaced areas to the total weft length of the hinge D be about 0.75 or less, for example about 0.43. The weft spacing of the spaced areas in Fig. 2C may be the same or different. The continuous area is where the corresponding textile layer is continuous. That is, both the first textile layer 1 and the second textile layer 2 are present in the same space in the weft direction at continuous areas. The weft spacing L between two adjacent connecting portions 3 in the weft direction of each continuous area in Fig. 2C may also be the same or different, and the weft spacing L of each spaced area may be the same or different from the weft spacing L of each continuous area, but both are within the weft spacing L described above, preferably within the range of about 5-70 mm, and more preferably about 20-50 mm, for example, about 25 mm, 30 mm, and 40 mm. The weft spacing L of each spaced area, the weft spacing L of continuous areas and the number of spaced areas can be adjusted according to the requirements of actual elongation and tensile strength.

Referring to Fig. 2D and its corresponding schematic top view 2K, the hinge may comprise one spaced area, i.e. comprising only two connecting portions 3. Only the spaced area S1 of the first textile layer 1 or the second textile layer 2 is arranged in the middle in the weft direction of the hinge. The weft length I2 of the continuous area S2 of the first textile layer 1 and the second textile layer 2 on one zonal side of the spaced area S1 is substantially the same as the weft length I3 of the continuous area S3 of the first textile layer 1 and the second textile layer 2 on the other zonal side of the spaced area S1 (opposite to S2), i.e. I2 = I3, and the continuous areas S2 and S3 have substantially the same tensile strength and elongation. Referring to Fig. 2D, the weft spacing L between the connecting portions 3 is preferably about 70-200 mm, for example about 70 mm, 100 mm, 130 mm, 160 mm, 180 mm, and 200 mm. Since only two connecting portions 3 are present, the weft spacing L is the sum L1 of the weft spacing of the spaced areas. The ratio L1/D of the sum L1 of the weft spacing of the spaced areas to the total weft length of the hinge D is about 0.8 or less, preferably about 0.35-0.8, for example, about 0.35, 0.45, 0.6, 0.7, and 0.8.

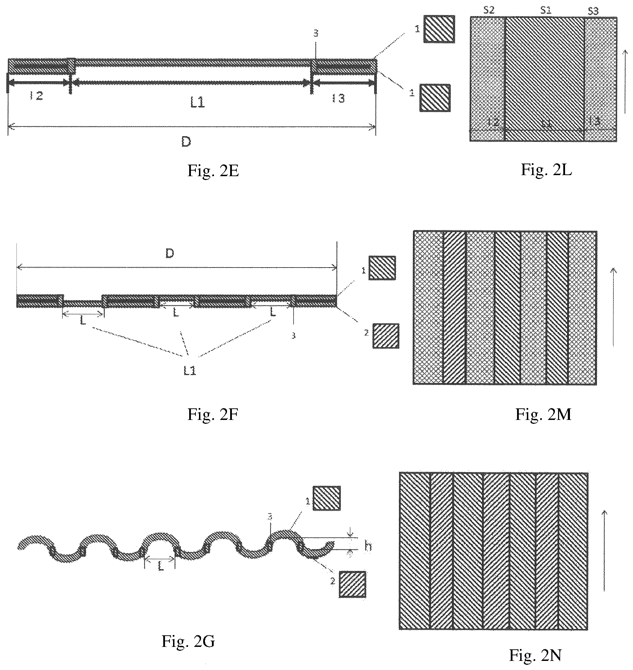

In one embodiment, the second textile layer 2 of the airbag door hinge is formed by folding the first textile layer 1 at an edge. Referring to Fig. 2E and its corresponding schematic top view 2L, the hinge comprises a spaced area, which differs from the solution of Fig. 2D in that the second textile layer 2 is formed by folding the first textile layer 1 by 180 degrees at two opposite edges of the first textile layer 1 towards the middle of the textile layer. That is, the first textile layer 1 and the second textile layer 2 are the same piece of fabric. As shown in Fig. 2E, since only two connecting portions 3 are present, the weft spacing L is the sum L1 of the weft spacings in the spaced area. The ratio L1/D of the sum L1 of the weft spacings in the spacer region to the total weft length of the hinge D is about 0.8 or less, preferably about 0.35-0.8, for example, about 0.35, 0.45, 0.6, 0.7, and 0.8.

In one embodiment, each of the first textile layer 1 and the second textile layer 2 in the airbag door hinge is a textile layer including at least one spaced area. With reference to Fig. 2F and its corresponding schematic top view 2M, each of the first textile layer 1 and the second textile layer 2 is a textile layer including at least one spaced area, but the first textile layer 1 and the second textile layer 2 are arranged such that the entire hinge is continuous, i.e. with the first textile layer 1 or the second textile layer 2 in the same space in the weft direction at the spaced area. In Fig. 2F, the first textile layer 1 and the second textile layer 2 are arranged such that the first textile layer 1 and the second textile layer 2 in the same space in the weft direction can simultaneously be continuous areas or alternatively have a spaced area. The weft spacings L between each two adjacent connecting portions 3 in the continuous area in the weft direction in Fig. 2F may also be the same or different, and the weft spacing L of each spaced area and the weft spacing L of each continuous area may be the same or different. The weft spacing L is about 5-200 mm, preferably about 5-70 mm, more preferably about 20-50 mm, for example, about 25 mm, 30 mm, and 40 mm. The weft spacing L of each spaced area, the weft spacing L of each continuous area, and the number of spaced areas can be adjusted according to the requirements of actual elongation rate and tensile strength.

The arrangement of the first textile layer 1 and the second textile layer 2 in the entire hinge may also be in such a way that neither the first textile layer 1 nor the second textile layer 2 is a continuous area at the same time in the same space in the weft direction. Referring to Fig. 2G and its corresponding top view 2N, the first textile layer 1 and the second textile layer 2 are arranged in such a way that the same space in the weft direction of the entire hinge is either a spaced area of the first textile layer 1 or a spaced area of the second textile layer 2, or a continuous area of the first textile layer 1 or a continuous area of the second textile layer 2, but not a continuous area at the same time. However, the arrangement should be such that the entire hinge is continuous, i.e. the first textile layer 1 and the second textile layer 2 are not spaced areas at the same time in the same space in the weft direction of the entire hinge. The weft spacings L of the spaced areas in Fig. 2G may be the same or different. The weft spacing L is about 5-200 mm, preferably about 5-70 mm, more preferably about 20-50 mm, for example, about 25 mm, 30 mm, and 40 mm. The weft spacing L of each spaced area, the weft spacing L of each continuous area, and the number of spaced areas can be adjusted according to the requirements of actual elongation rate and tensile strength.

The number of connecting portions 3 depends on the actual requirements for elongation and tensile strength and is not particularly limited. The connection form of the connecting portion 3 is in the form of a loop, a thread, or a combination thereof. When the connecting portion is in the form of loops or threads, the materials of the loops or threads include, but are not limited to, fibers, metals, and the like. When fibers are used as the material, the fibers are listed below.

As shown in Fig. 3A, it is a top loop view of a hinge of one embodiment of the present disclosure. The regions shown do not include spaced areas. The first textile layer 1 (black portion) and the second textile layer 2 (white portion) are constructed as knitted fabrics. The fabrics of the first textile layer 1 and the second textile layer 2 may also be woven fabrics or a combination thereof with knitted fabrics. The fabrics of the first textile layer 1 and the second textile layer 2 in Fig. 3A are in particular weft knitted fabrics. However, they may also be warp knitted fabrics. The stitch pattern of the fabric is not particularly limited, and comprises, but is not limited to, a basic stitch, a derivative stitch, a single-sided stitch, a double-sided stitch, a compound stitch such as a weft plain stitch, a rib stitch, a tuck stitch, a loop transfer stitch, a leno stitch, a plating stitch, a floating thread plating stitch, a weft laid-in stitch, a stitch as shown in Fig. 4 or a combination thereof, and the like, preferably a weft plain stitch, a rib stitch, a tuck stitch, a loop transfer stitch, a leno stitch, a plating stitch, a floating thread plating stitch, a stitch as shown in Fig. 4, or a combination thereof.

In the embodiment of Fig. 3A, both the first textile layer 1 and the second textile layer 2 use the same stitch pattern, i.e. a weft flat stitch. However, in the present disclosure, the stitch patterns of the first textile layer 1 and the second textile layer 2 may be different. Combinations of one or more stitch patterns may also be used in the respective textile layers of the first textile layer 1 and the second textile layer 2. In the embodiment of Fig. 3A, the first textile layer 1 has the same mesh pattern as the second textile layer 2. However, in the present disclosure, the mesh patterns of the first textile layer and the second textile layer may be different.

The weaving method of the first textile layer 1 and the second textile layer 2 is a weaving method commonly used in the art. Knitting formation using a flat knitting machine is shown in Fig. 3A.

In one embodiment, the first textile layer 1 and the second textile layer 2 consist of fiber material. In another embodiment, the materials used for weaving the first textile layer 1 and the second textile layer 2 are fibers. The first textile layer 1 and the second textile layer 2 are each composed of at least one fiber component. The fiber components are woven by winding, crossing and looping to form a textile layer. Such fibers are commonly used in the art for weaving and include, but are not limited to, synthetic fibers such as polyethylene, polypropylene, regenerated cellulose fibers, polyamides, carbon fibers, polyacrylonitrile, polyesters such as aramid, polyester, nylon, acrylic, polypropylene, poly vinyl chloride fiber, and the like, natural fibers such as cellulose, cotton, sisal, abaca, kapok, ramie, flax, hemp, jute, animal hair, silk, and the like. One type of fiber may be used, or a combination of two or more types of fibers may be used. The materials of the first textile layer 1 and the second textile layer 2 are selected to have a certain tensile strength and elongation rate, respectively. This contributes to a good tensile strength and elongation rate of the hinge. The fiber types of the first textile layer 1 and the second textile layer 2 may be the same or different. Generally, however, the mechanical properties such as elongation and tensile strength of the two layers are not significantly different. In the embodiment of Fig. 3A, the first textile layer 1 has the same fiber type as that of the second textile layer 2. In the embodiment of Fig. 3A, the fibers used in both the first textile layer 1 and the second textile layer 2 are aramid fibers.

The first textile layer 1 and the second textile layer 2 should have a certain transversal density and a longitudinal density range, and a certain grammage, so that they have excellent elongation and tensile strength, and the airbag door cannot be separated from the load bearing component when the airbag is ejected. The transversal density of the first textile layer 1 and the second textile layer 2 is generally about 5-25 loops/25 mm, preferably about 5-10 loops/25 mm, for example about 7 and 13 loops/25 mm, respectively. The longitudinal density of the first textile layer 1 and the second textile layer 2 is generally about 5-25 loops/25 mm, preferably about 9-15 loops/25 mm, for example about 12 loops/25 mm, respectively. The grammage of the first textile layer 1 and the second textile layer 2 is about 100-2000 gsm, preferably about 400-800 gsm, for example about 560 gsm, respectively. The first textile layer 1 and the second textile layer 2 may have substantially the same or different transversal density, longitudinal density and grammage. Different regions within the textile layer of each of the first textile layer 1 and the second textile layer 2 may also have different transversal density, longitudinal density and grammage, but such differences vary within the ranges described above.

Referring to Fig. 3A, the connecting portion 3 is a loop connecting type. The first textile layer 1 is mainly composed of black loops, and the second textile layer 2 is mainly composed of white loops. The first textile layer 1 and the second textile layer 2 comprise loops respectively, and the connection is realized by embedding the loops comprised in the first textile layer 1 into the second textile layer 2 and/or embedding the loops comprised in the second textile layer 2 into the first textile layer 1. That is, the loops in the first textile layer 1 and the second textile layer 2 are nested with each other for connection. Specifically, the connecting type 3(1) is that the white loop a comprised in the second textile layer 2 is embedded into the first textile layer 1. The connecting type 3(2) is that a black loop b comprised in the first textile layer 1 is embedded into the second textile layer 2. The first textile layer 1 and the second textile layer 2 are knitted at the same time, and when knitted at the connecting portion 3, the loop of the first textile layer 1 is transferred to the second textile layer 2 by means of a knitting the needle, and the loop of the second textile layer 2 is transferred to the first textile layer 1 by means of a knitting needle, so that the loops a and b can be embedded into the opposite textile layers, respectively, namely the first textile layer 1 and the second textile layer 2. In the first textile layer 1, the black loop b, which should be initially at the position of the connecting type 3(1) in the first textile layer 1, is embedded into the position of the white loop a, which should be initially at the position of the connecting type 3(2) in the second textile layer 2, and the white loop a, which should be initially at the position of the connecting type 3(2) in the second textile layer, is embedded into the position of the black loop b, which should be initially at the position of the connecting type 3(1) in the first textile layer 1. That is, the positions of the loops a and b are alternately connected to each other in the opposite textile layers. The manner of embedding is winding, i.e. meaning that the loop a comprised in the second textile layer 2 is wound to the loop comprised in the first textile layer 1, and the loop b comprised in the first textile layer 1 is wound to the loop comprised in the second textile layer 2. When the airbag is deployed, the loops are stretched or extended, contributing to the extension of the airbag door hinge.

In the present disclosure, the connection can also be realized in other ways. In one embodiment, the connection is realized by embedding the loop comprised in the first textile layer 1 into the second textile layer 2 so that it is wound to the loop comprised in the second textile layer 2. In another embodiment, the connection is realized by embedding the loop comprised in the second textile layer 2 into the first textile layer 1 so that it is wound to the loop comprised in the first textile layer 1. In yet another embodiment, the first textile layer is connected to the second textile layer by using a loop independent from the first textile layer and from the second textile layer. In a preferred embodiment, the loop is connected to the textile layer by embedding, winding, or other means known in the art. In yet another embodiment, the first textile layer and the second textile layer are connected by a plurality of threads, such as connecting threads, which may be connected to the first textile layer and the second textile layer in any manner known in the art, with the connecting threads at any angle to the first and/or second textile layer.

Referring to Fig. 3A, the weft spacing L is the distance in the same weft direction from one side of a first loop of the connecting portion to the same side of an adjacent second loop of the adjacent connecting portion in the weft direction of the same textile layer. As described above, the weft spacing L may be about 5-200 mm, for example about 10-100 mm, about 20-50 mm, about 20-35 mm, about 5-70 mm, about 70-200 mm, for example about 5, 30, 70, 160, and 200 mm.

In one embodiment, the first textile layer 1 and the second textile layer 2 have substantially uniform mechanical properties such as elongation and tensile strength. The tensile and elongation direction is the longitudinal or transversal direction of the loops in the textile layer. The elongation of the hinge of the present disclosure is about 20-200%, for example about 100%, 50%, 80%, 120%. The tensile strength of the hinge of the present disclosure is about 800-4000 N/5cm for example about 800 N/5cm, 1500 N/5cm, 2000 N/5cm, 4000 N/5cm. In another embodiment, to achieve a controlled elongation effect, the first textile layer 1 and the second textile layer 2 have different mechanical properties such as elongation and tensile strength, but such mechanical properties are within the ranges described herein.

In one embodiment, different regions within the first textile layer 1 and the second textile layer 2 have substantially uniform mechanical properties such as elongation and tensile strength. In another embodiment, different regions within the first textile layer 1 and the second textile layer 2 have different mechanical properties such as elongation and tensile strength, which are within the ranges described herein.

Referring to Fig. 3A, the embedding or replacement of the loops used as the connecting portions 3 in the first textile layer 1 and the second textile layer 2 is performed in columns. Referring to Fig. 3A, columns I and II in the first textile layer 1 are embedded or replaced by loops in the second textile layer 2. Columns I' and II' in the second textile layer 2 are embedded or replaced by loops in the first textile layer 1.

In one embodiment, for the embedding or replacement of the loops used as connecting portions 3 in the first textile layer 1 and the second textile layer 2 in columns, it may also be connected using threads or a combination of a thread, and a loop at the same time.

Referring to Fig. 3B (the regions shown not including spaced areas), a first textile layer 1 is mainly composed of black loops, a second textile layer 2 is mainly composed of white loops, and the embedding or replacement of the loops for the connecting portions 3 of the first textile layer 1 and the second textile layer 2 is done point by point. The range of the weft spacing L of the loop used as the connecting portion 3 in Fig. 3B corresponds to the range of L herein. As shown in Fig. 3B, a warp spacing L' is the warp spacing between two adjacent connecting portions in the warp direction. Specifically, as shown in FIG. 3B the distance in perpendicular direction from the top of a first loop of the connecting portion to the top of the adjacent second loop of the adjacent connecting portion in the same textile layer. The warp spacing L' may be about 150 mm or less, preferably about 2-150 mm, for example, 3-50 mm and 4-20 mm. For example, about 4 mm, 10 mm, 30 mm, 80 mm, 10 mm, and 120 mm. Considering that the embedding or replacement of the loops of the connecting portion 3 is performed in units of the number of loops, when the warp spacing L' is less than 2 mm, it is generally understood that each loop in the column is embedded or replaced by a loop in the opposite layer, for example in the solution of Fig. 3A.

It should be noted that Figs. 3A and 3B are exemplary and do not represent the actual number of loops between the connecting portions 3.

### Examples

The present disclosure is described in further detail with reference to the following examples, but it is not intended to limit the scope of the present disclosure.

Examples 1 to 7 illustrate the airbag door hinge. In all examples, aramid fiber is used as a textile material, the stitch pattern of the fabric is a weft flat stitch, and the fabric is produced and formed by using a flat knitting machine. Examples 1 to 6 have connecting portions 3 using a loop connecting type as shown in Fig. 3A. Embodiment 7 has connecting portions 3 using a loop connecting type as shown in Fig. 3B. The first textile layer 1 and the second textile layer 2 have a transversal density of 13 loops/25 mm, a longitudinal density of 12 loops/25 mm each, a grammage of 560 gsm and are evenly distributed in the respective textile layers.

The gap h between the first textile layer 1 and the second textile layer 2 in the following examples is 0 mm. That is, the first textile layer 1 and the second textile layer 2 are completely fitted.

### Example 1

Side and top views of the hinge are shown in Figs. 2B and 21, respectively. Each of the first textile layer 1 and the second textile layer 2 of the hinge is a respectively continuous textile layer. The weft spacing L between two adjacent connecting portions 3 in the weft direction of the connecting portions 3 for the first textile layer 1 and the second textile layer 2 is about 30 mm. The first textile layer 1 and the second textile layer 2 have the same elongation of 120%, respectively. The elongation of the hinge is 100%. The tensile strength of the hinge is 2000 N/5cm.

### Example 2

Side and top views of the hinge are shown in Figs. 2B and 21, respectively. Each of the first textile layer 1 and the second textile layer 2 of the hinge is a respectively continuous textile layer. The weft spacing L between two adjacent connecting portions 3 in the weft direction of the connecting portions 3 for the first textile layer 1 and the second textile layer 2 is about 5 mm. The first textile layer 1 and the second textile layer 2 have the same elongation. The elongation of the hinge is 50%. The tensile strength of the hinge is 4000 N/5cm.

### Example 3

Side and top views of the hinge are shown in Figs. 2C and 5A, respectively. The first textile layer 1 in the hinge is a continuous textile layer, and the second textile layer 2 is a textile layer including three spaced areas. The weft spacing L between two adjacent connecting portions 3 in the weft direction of the connecting portions 3 for the first textile layer 1 and the second textile layer 2 is 30 mm, a total weft length of the hinge D of 210 mm, a sum L1 of the weft spacing of the spaced areas of 90 mm, and an L1/D of 0.43. The elongation rate of the hinge is 100%. The tensile strength of the hinge is 1200 N/5cm.

### Example 4

Side and top views of the hinge are shown in Figs. 2D and 5B, respectively. The first textile layer 1 in the hinge is a continuous textile layer, and the second textile layer 2 is a textile layer including one spaced area. The weft spacing L between two adjacent connecting portions 3 in the weft direction of the connecting portions 3 for the first textile layer 1 and the second textile layer 2 or a sum L1 of the weft spacing of the spaced areas is 160 mm, a total weft length of the hinge D of 200 mm, I2 = I3 = 20 cm, and an L1/D of 0.8. The elongation rate of the hinge is 80%. The tensile strength of the hinge is 800 N/5cm.

### Example 5

Side and top views of the hinge are shown in Figs. 2D and 5B, respectively. The first textile layer 1 in the hinge is a continuous textile layer, and the second textile layer 2 is a textile layer including one spaced area. The weft spacing L between two adjacent connecting portions 3 in the weft direction of the connecting portions 3 for the first textile layer 1 and the second textile layer 2 or a sum L1 of the weft spacing of the spaced areas is 70 mm, I2 = I3, a total weft length of the hinge D of 200 mm, and an L1/D of 0.35. The elongation of the hinge is 100%. The tensile strength of the hinge is 1500 N/5cm.

### Example 6

Side and top views of the hinge are shown in Figs. 2D and 5B, respectively. The first textile layer 1 in the hinge is a continuous textile layer, and the second textile layer 2 is a textile layer including one spaced area. The weft spacing L between two adjacent connecting portions 3 in the weft direction of the connecting portions 3 for the first textile layer 1 and the second textile layer 2 or a sum L1 of the weft spacing of the spaced areas is 200 mm, I2 = I3, a total weft length of the hinge D of 250 mm and an L1/D of 0.8. The elongation of the hinge is 80%. The tensile strength of the hinge is 800 N/5cm.

### Example 7

Side and top views of the hinge are shown in Figs. 2B and 21, respectively. Each of the first textile layer 1 and the second textile layer 2 of the hinge is a respectively continuous textile layer. The weft spacing L between two adjacent connecting portions 3 in the weft direction of the connecting portions 3 for the first textile layer 1 and the second textile layer 2 is about 30 mm. The warp spacing L' is about 4 mm. The elongation rate of the hinge is 80%. The tensile strength of the hinge is 800 N/5cm.

Examples 8 and 9 illustrate the preparation of the trim component for vehicle interior.

### Example 8

The trim component is manufactured by:
(1) providing the airbag door hinge C1;
(2) disposing the airbag door hinge C1 in a mold for forming the chute A22, the substrate A21 and the basic door A12, with the airbag door hinge C1 disposed in the mold at a portion where the substrate A21 and the basic door A12 are formed;
(3) injecting a molten plastic material into the mold, covering at least partially the airbag door hinge C1 with the molten plastic material;
(4) cooling the molten plastic material to get the chute A22, the substrate A21 and the basic door A12 integrally formed, with the airbag door hinge C1 embedded in the substrate A21 and the basic door A12;
(5) compounding the foam layer and the surface layer on the integrally-formed part of the substrate A21 and the basic door A12 in a direction away from the chute A22, to form the foam layer A23 of the load bearing component, the surface layer A24 of the load bearing component, the foam layer A13 of the airbag door, and the surface layer A14 of the airbag door; and
(6) forming a weakened area W by weakening between the basic door A12 and the substrate A21, so that the airbag door A1 is flipped open to form the opening O to facilitate the deployment of the airbag G through the opening.

### Example 9

The trim component is manufactured by:
(1) providing the airbag door hinge C1;
(2) disposing the two opposite fixed sections C12 and C13 of the airbag door hinge C1 in a mold at portion where the chute A22 and the reinforcement door A11 are formed;
(3) injecting a molten plastic material into the mold, covering at least partially the airbag door hinge C1 with the molten plastic material;
(4) cooling the molten plastic material to obtain the chute A22 and the reinforcement door A11, with two opposite fixed sections C12 and C13 of the hinge C1 embedded in the chute A22 and the reinforcement door A11, respectively, so that the reinforcement door A11 is connected to the chute A22 through the hinge section C11 of the hinge C1;
(5) compounding the foam layer and the surface layer on the integrally-formed piece of the substrate A21 and the basic door A12 in a direction away from the chute A22, to form the foam layer A23 of the load bearing component, the surface layer A24 of the load bearing component, the foam layer A13 of the airbag door, and the surface layer A14 of the airbag door;
(6) providing an integrally-formed part of the substrate A21 and the basic door A12; forming a weakened area W by weakening between the basic door A12 and the substrate A21, so that the airbag door A1 is flipped open to form the opening O to facilitate the deployment of the airbag G through the opening; and
(7) welding to connect the chute A22 with the substrate A21, and to connect the reinforcement door A11 with the basic door A12.

It will be apparent to those skilled in the art that many modifications and variations can be made in the present disclosure without departing from the scope of the appended claims The specific embodiments described herein are provided by way of example only and are not meant to be limiting in any way. The true scope of the present disclosure is indicated by the appended claims, and the description and examples are exemplary only.

## Claims

1. An airbag door hinge is used to connect an airbag door (A1) and a load bearing component (A2) surrounding the airbag door (A1), the airbag door hinge is a double-layer structure and has a first textile layer (1) and a second textile layer (2), and the first textile layer (1) and the second textile layer (2) are connected by a plurality of connecting portions (3), **characterized in that** the connecting portions (3) comprise a thread, a loop, or a combination thereof.

2. The airbag door hinge according to Claim 1, **characterized in that** each of the first textile layer (1) and the second textile layer (2) are each continuous textile layer.

3. The airbag door hinge according to Claim 1, **characterized in that** the second textile layer (2) is formed by folding the first textile layer (1) at an edge.

4. The airbag door hinge according to Claim 1, **characterized in that** one of the first textile layer (1) and the second textile layer (2) is a continuous textile layer, and the other is a textile layer including at least one spaced area (S1).

5. The airbag door hinge according to Claim 1, **characterized in that** each of the first textile layer (1) and the second textile layer (2) is a textile layer including at least one spaced area (S1).

6. The airbag door hinge according to one of Claim 4-5, **characterized in that** the spaced area (S1) is defined by the connecting portion (3).

7. The airbag door hinge according to one of Claim 1-6, **characterized in that** a weft spacing L between two adjacent connecting portions (3) in a weft direction is 5-200 mm.

8. The airbag door hinge according to one of Claim 1-7, **characterized in that** the weft spacing (L) between two adjacent connecting portions (3) in the weft direction is 10-100 mm.

9. The airbag door hinge according to one of Claim 1-8, **characterized in that** a gap (h) between the first textile layer (1) and the second textile layer (2) is 2 mm or less.

10. The airbag door hinge according to one of Claim 1-9, **characterized in that** the first textile layer (1) and/or the second textile layer (2) comprise loops respectively, and the connection is realized by embedding the loops comprised in the first textile layer (1) into the second textile layer (2) and/or embedding the loops comprised in the second textile layer (2) into the first textile layer (1).

11. The airbag door hinge according to one of Claim 1-10, **characterized in that** the transversal density of the first textile layer (1) and the second textile layer (2) is 5-25 loops/25 mm, respectively; and/or the longitudinal density is 5-25 loops/25 mm, respectively.

12. The airbag door hinge according to one of Claim 1-11, **characterized in that** the first textile layer (1) and the second textile layer (2) are weft or warp knitting fabrics, respectively.

13. The airbag door hinge according to one of Claim 3-12, **characterized in that** the ratio L1/D of the sum L1 of the weft spacing of the spaced areas to the total weft length of the hinge D is about 0.8 or less, preferably about 0.35-0.8.

14. The airbag door hinge according to one of Claim 1-13, **characterized in that** the airbag door hinge (C1) is connected to the airbag door (A1) and the load bearing component (A2) by insert injection molding.

15. A trim component for vehicle interior comprising
- an airbag door (A1);
- a load bearing component (A2) surrounding the airbag door (A1), and
- airbag door hinge (C1),
wherein the load bearing component (A2) comprises a substrate (A21) and a chute (A22); the substrate (A21) defines an opening (O) for the airbag to deploy through the opening (O); the substrate (A21) and the chute (A22) are integrally formed; the airbag door (A1) is configured to cover the opening (O); and the airbag door hinge (C1) is used to connect the airbag door (A1) and the substrate (A21);
wherein the airbag door hinge (C1) is used for connection with the airbag door (A1) and the load bearing component (A2),
wherein the airbag door hinge (C1) is the airbag door hinge (C1) according to any one of Claims 1-14.

## Patentansprüche

1. Airbag-Türscharnier, das verwendet wird, um eine Airbag-Tür (A1) und ein die Airbag-Tür (A1) umgebendes tragendes Bauteil (A2) zu verbinden, wobei das Airbag-Türscharnier eine zweilagige Struktur aufweist und eine erste Textilschicht (1) und eine zweite Textilschicht (2) aufweist, wobei die erste Textilschicht (1) und die zweite Textilschicht (2) durch eine Vielzahl von Verbindungsbereichen (3) verbunden sind,
**dadurch gekennzeichnet, dass**
die Verbindungsbereiche (3) einen Faden, eine Schlinge oder eine Kombination davon aufweisen.

2. Airbag-Türscharnier nach Anspruch 1,
**dadurch gekennzeichnet, dass** die erste Textilschicht (1) und die zweite Textilschicht (2) jeweils durchgehende Textilschichten sind.

3. Airbag-Türscharnier nach Anspruch 1,
**dadurch gekennzeichnet, dass** die zweite Textilschicht (2) durch Falten der ersten Textilschicht (1) an einer Kante gebildet ist.

4. Airbag-Türscharnier nach Anspruch 1,
**dadurch gekennzeichnet, dass** eine der ersten Textilschicht (1) und der zweiten Textilschicht (2) eine durchgehende Textilschicht ist und die andere eine Textilschicht ist, die mindestens einen beabstandeten Bereich (S1) aufweist.

5. Airbag-Türscharnier nach Anspruch 1,
**dadurch gekennzeichnet, dass** sowohl die erste Textilschicht (1) als auch die zweite Textilschicht (2) jeweils eine Textilschicht mit mindestens einem beabstandeten Bereich (S1) sind.

6. Airbag-Türscharnier nach einem der Ansprüche 4 bis 5,
**dadurch gekennzeichnet, dass** der beabstandete Bereich (S1) durch den Verbindungsbereich (3) definiert ist.

7. Airbag-Türscharnier nach einem der Ansprüche 1 bis 6,
**dadurch gekennzeichnet, dass** ein Schussabstand L zwischen zwei benachbarten Verbindungsbereichen (3) in Schussrichtung 5 bis 200 mm beträgt.

8. Airbag-Türscharnier nach einem der Ansprüche 1 bis 7,
**dadurch gekennzeichnet, dass** der Schussabstand (L) zwischen zwei benachbarten Verbindungsbereichen (3) in Schussrichtung 10 bis 100 mm beträgt.

9. Airbag-Türscharnier nach einem der Ansprüche 1 bis 8,
**dadurch gekennzeichnet, dass** ein Abstand (h) zwischen der ersten Textilschicht (1) und der zweiten Textilschicht (2) 2 mm oder weniger beträgt.

10. Airbag-Türscharnier nach einem der Ansprüche 1 bis 9,
**dadurch gekennzeichnet, dass** die erste Textilschicht (1) und/oder die zweite Textilschicht (2) jeweils Schlingen aufweisen und die Verbindung dadurch hergestellt ist, dass die in der ersten Textilschicht (1) enthaltenen Schlingen in die zweite Textilschicht (2) eingebettet sind und/oder die in der zweiten Textilschicht (2) enthaltenen Schlingen in die erste Textilschicht (1) eingebettet sind.

11. Airbag-Türscharnier nach einem der Ansprüche 1 bis 10,
**dadurch gekennzeichnet, dass** die Querdichte der ersten Textilschicht (1) und der zweiten Textilschicht (2) jeweils 5 bis 25 Schlingen/25 mm beträgt und/oder die Längsdichte jeweils 5 bis 25 Schlingen/25 mm beträgt.

12. Airbag-Türscharnier nach einem der Ansprüche 1 bis 11,
**dadurch gekennzeichnet, dass** die erste Textilschicht (1) und die zweite Textilschicht (2) jeweils Schuss- oder Kettstrickgewebe sind.

13. Airbag-Türscharnier nach einem der Ansprüche 3 bis 12,
**dadurch gekennzeichnet, dass** das Verhältnis L1/D der Summe L1 der Schussabstände der beabstandeten Bereiche zur Gesamtschusslänge des Scharniers D etwa 0,8 oder weniger, vorzugsweise etwa 0,35 bis 0,8 beträgt.

14. Airbag-Türscharnier nach einem der Ansprüche 1 bis 13,
**dadurch gekennzeichnet, dass** das Airbag-Türscharnier (C1) durch Einlagespritzguß mit der Airbag-Tür (A1) und dem tragenden Bauteil (A2) verbunden ist.

15. Verkleidungsbauteil für den Fahrzeuginnenraum, welches Folgendes aufweist:
- eine Airbagtür (A1);
- ein die Airbagtür (A1) umgebendes tragendes Bauteil (A2) und
- ein Airbagtürscharnier (C1),
wobei das tragende Bauteil (A2) ein Substrat (A21) und eine Rinne (A22) aufweist; das Substrat (A21) eine Öffnung (O) zum Entfalten des Airbags durch die Öffnung (O) definiert; das Substrat (A21) und die Rinne (A22) einstückig ausgebildet sind; die Airbagtür (A1) so konfiguriert ist, dass sie die Öffnung (O) bedeckt; und das Airbag-Türscharnier (C1) dazu verwendet wird, die Airbagtür (A1) und das Substrat (A21) zu verbinden;
wobei das Airbag-Türscharnier (C1) zur Verbindung mit der Airbag-Tür (A1) und dem tragenden Bauteil (A2) verwendet wird,
wobei das Airbag-Türscharnier (C1) das Airbag-Türscharnier (C1) nach einem der Ansprüche 1 bis 14 ist.

## Revendications

1. Charnière de porte à airbag utilisée pour connecter une porte à airbag (A1) et un composant de support de charge (A2) entourant la porte à airbag (A1), la charnière de porte à airbag étant une structure bicouche et ayant une première couche textile (1) et une seconde couche textile (2), et la première couche textile (1) et la seconde couche textile (2) étant connectées par une pluralité de portions de connexion (3),
**caractérisée en ce que**
les portions de connexion (3) comprenant un pas de vis, une boucle, ou une combinaison de ceux-ci.

2. Charnière de porte à airbag selon la revendication 1,
**caractérisée en ce que** chacune de la première couche textile (1) et de la seconde couche textile (2) sont chacune des couches textiles continues.

3. Charnière de porte à airbag selon la revendication 1,
**caractérisée en ce que** la seconde couche textile (2) est formée en pliant la première couche textile (1) au niveau d'un bord.

4. Charnière de porte à airbag selon la revendication 1,
**caractérisée en ce que** l'une de la première couche textile (1) et de la seconde couche textile (2) est une couche textile continue, et l'autre est une couche textile incluant au moins une zone espacée (S1).

5. Charnière de porte à airbag selon la revendication 1,
**caractérisée en ce que** chacune de la première couche textile (1) et de la seconde couche textile (2) est une couche textile incluant au moins une zone espacée (S1).

6. Charnière de porte à airbag selon l'une des revendications 4 à 5,
**caractérisée en ce que** la zone espacée (S1) est définie par la portion de connexion (3).

7. Charnière de porte à airbag selon l'une des revendications 1 à 6,
**caractérisée en ce qu'**un espacement de trame (L) entre deux portions de connexion adjacentes (3) dans une direction de trame est de 5 à 200 mm.

8. Charnière de porte à airbag selon l'une des revendications 1 à 7,
**caractérisée en ce que** l'espacement de trame (L) entre deux portions de connexion adjacentes (3) dans une direction de trame est de 10 à 100 mm.

9. Charnière de porte à airbag selon l'une des revendications 1 à 8,
**caractérisée en ce qu'**un intervalle (h) entre la première couche textile (1) et la seconde couche textile (2) est de 2 mm ou moins.

10. Charnière de porte à airbag selon l'une des revendications 1 à 9,
**caractérisée en ce que** la première couche textile (1) et/ou la seconde couche textile (2) comprennent des boucles respectivement, et la connexion est réalisée en intégrant les boucles comprises dans la première couche textile (1) jusque dans la seconde couche textile (2) et/ou en intégrant les boucles comprises dans la seconde couche textile (2) jusque dans la première couche textile (1).

11. Charnière de porte à airbag selon l'une des revendications 1 à 10,
**caractérisée en ce que** la densité transversale de la première couche textile (1) et de la seconde couche textile (2) est de 5 à 25 boucles/25 mm, respectivement ; et/ou la densité longitudinale est de 5 à 25 boucles/25 mm, respectivement.

12. Charnière de porte à airbag selon l'une des revendications 1 à 11,
**caractérisée en ce que** la première couche textile (1) et la seconde couche textile (2) sont des étoffes en tricot de trame ou de chaîne, respectivement.

13. Charnière de porte à airbag selon l'une des revendications 3 à 12,
**caractérisée en ce que** le rapport L1/D de la somme L1 de l'espacement de trame des zones espacées sur la longueur de trame totale de la charnière D est de 0,8 ou moins environ, de préférence de 0,35 à 0,8 environ.

14. Charnière de porte à airbag selon l'une des revendications 1 à 13,
**caractérisée en ce que** la charnière de porte à airbag (C1) est connectée à la porte à airbag (A1) et au composant de support de charge (A2) par moulage par injection sur insert.

15. Composant d'habillage pour un intérieur de véhicule comprenant
- une porte à airbag (A1) ;
- un composant de support de charge (A2) entourant la porte à airbag (A1), et
- une charnière de porte à airbag (C1),
dans lequel le composant de support de charge (A2) comprend un substrat (A21) et une goulotte (A22) ; le substrat (A21) définit une ouverture (O) pour que l'airbag se déploie à travers l'ouverture (O) ; le substrat (A21) et la goulotte (A22) sont formés de manière intégrale ; la porte à airbag (A1) est configurée pour couvrir l'ouverture (O) ; et la charnière de porte à airbag (C1) est utilisée pour connecter la porte à airbag (A1) et le substrat (A21) ;
dans lequel la charnière de porte à airbag (C1) est utilisée pour une connexion avec la porte à airbag (A1) et le composant de support de charge (A2),
dans lequel la charnière de porte à airbag (C1) est la charnière de porte à airbag (C1) selon l'une quelconque des revendications 1 à 14.
